# EUROPÄISCHE PATENTSCHRIFT

(11) **EP 0 324 902 B1**
(45) Veröffentlichungstag und Bekanntmachung des Hinweises auf die Patenterteilung: **18.11.1993**
(21) Anmeldenummer: 88117794.3
(22) Anmeldetag: 26.10.1988
(51) Int. Cl.: H02M 3/10, H02M 7/217

(54) **Netzteil zur Erzeugung einer geregelten Gleichspannung**
Power supply for producing a regulated voltage
Alimentation stabilisée pour fournir une tension régulée

(30) Priorität: 20.01.1988 DE 3801428
(43) Veröffentlichungstag der Anmeldung: 26.07.1989
(73) Patentinhaber: Eaton GmbH, D-78555 Gosheim (DE)
(72) Erfinder: Weiss, Hans, Dipl.-Ing., D-7209 Gosheim (DE); Anders, Klaus, Dipl.-Ing., D-7209 Gosheim (DE)
(74) Vertreter: Vetter, Hans, Dipl.-Phys. Dr.

(56) Entgegenhaltungen:
- CH-B- 658 757
- DE-A- 3 501 519
- FR-A- 1 430 606
- PATENT ABSTRACTS OF JAPAN vol. 9, no. 93 (P-351)(1816) 23 April 1985 & JP-A-59 220815
- ELEKTRONIK. vol. 34, no. 4, Februar 1985, MÜNCHEN DE Seiten 86 - 90; W. Frank: "Phasenanschnittsteuerungen problembezogen"

## Beschreibung

Die Erfindung betrifft ein Netzteil zur Erzeugung einer geregelten Gleichspannung aus einer Netzwechselspannung nach der Gattung des Anspruches 1.

Aus der JP-A 59220815 (Patent Abstracts of Japan, Vol. 9, Nr. 93 (P-351)(1816) 23. April 1985) oder auch aus der FR-A 1,430,606 ist ein derartiges Netzteil bereits bekannt, bei dem das Halbleiterelement ausschließlich im Sättigungs- und Sperrzustand betrieben wird. Bei diesem bekannten Netzteil wird jedoch der Regeltransistor zu Beginn einer gleichgerichteten Spannungshalbwelle eingeschaltet, unabhängig davon, wie die augenblickliche Ausgangsspannung ist. Die Ausschaltung erfolgt bei Erreichen eines vorgegebenen Schwellwertes. Dies birgt die Gefahr, daß die Ausgangsgleichspannung sehr weit absinken kann, da der Einschaltzeitpunkt starr mit dem Beginn einer Halbwelle gekoppelt ist. Weiterhin fließt beim Ausschalten des Schalttransistors ein sehr hoher Strom, wodurch hohe Ausschaltspannungsspitzen entstehen können, die sich als elektrische Störspannungen bemerkbar machen.

Eine Aufgabe der vorliegenden Erfindung besteht daher darin, ein Netzteil der eingangs genannten Gattung zu schaffen, das bei sicherer Aufrechterhaltung der Regelgleichspannung im Vergleich zu bekannten Netzteilen praktisch keine Verlustleistung aufweist.

Diese Aufgabe wird erfindungsgemäß durch die kennzeichnenden Merkmale des Anspruches 1 gelöst.

Das erfindungsgemäße Netzteil weist den Vorteil auf, daß die Einschaltung des Ladevorganges für den Kondensator während einer Halbwelle jederzeit individuell nach Bedarf erfolgen kann, so daß die vorgeschriebene Spannung nicht unterschritten werden kann. Im Ausschaltzeitpunkt des Regeltransistors fließt in diesem keinen Strom mehr, so daß Ausschaltspitzen vollständig vermieden werden. Da sich der Regeltransistor dabei immer im Sättigungs- oder Sperrzustand befindet, tritt im wesentlichen keine Verlustleistung auf. Das Halbleiterelement arbeitet somit im reinen Schaltbetrieb. Hierdurch kann das Netzteil sehr klein dimensioniert und kostengünstig hergestellt werden. Kühlelemente und andere Vorrichtungen zur Wärmeableitung können weitgehend entfallen.

Durch die in den Unteransprüchen aufgeführten Maßnahmen sind vorteilhafte Weiterbildungen und Verbesserungen des im Anspruch 1 angegebenen Netzteiles möglich.

Zur zyklischen Einschaltung des Sperrzustandes wird vorzugsweise ein Signal verwendet, das bei Erreichen oder Unterschreiten eines im Vergleich zur Scheitelspannung sehr geringen Spannungswerts durch die gleichgerichteten Spannungshalbwellen erzeugt wird. Hierdurch kann dieses Signal am Halbleiterelement abgegriffen und einer Schwellwertstufe zugeführt werden, an deren Ausgang die den Sperrzugang auslösenden Signale erzeugt werden.

Eine weitere Schwellwertstufe ist in vorteilhafter Weise zur Durchführung des Sollwert-/Istwert-Vergleichs vorgesehen, das heißt, in dieser Schwellwertstufe wird die am Kondensator anliegende Spannung mit einer intern oder extern anliegenden Referenzspannung als Sollwertspannung verglichen.

Als Schwellwertstufen können kostengünstig handelsübliche Schmitt-Trigger eingesetzt werden.

Die Auslössignale zur Vorgabe des Sättigungszustands und des Sperrzustands für das Halbleiterelement werden zweckmäßigerweise in einer dem Halbleiterelement vorgeschalteten Speichervorrichtung gespeichert, vor allem dann, wenn es sich um dynamische Signale handelt. Als Speichervorrichtung eignet sich eine bistabile Stufe, z.B. ein Flip -Flop .

Der Netztransformator weist vorzugsweise einen hohen Innenwiderstand auf, so daß bei einem ausgangsseitigen Kurzschluß od.dgl. eine Zerstörung der Halbleiterelemente nicht zu befürchten ist. Auch für die Ladung des ausgangsseitigen Kondensators, der üblicherweise eine sehr hohe Kapazität aufweist, wird hierdurch der Strom automatisch begrenzt.

Die Schwellwertstufen und der bistabile Speicher können Zweckmäßigerweise als integrierter Schaltkreis oder als Mikrorechner ausgebildet sein, wobei dann weitere Funktionen noch mitintegriert sein können. So kann beispielsweise das Netzteil noch zusätzliche Bauelemente und/oder Funktionen aufweisen, die einen alternativen Betrieb als Querregler (Shunt-Regler) gestatten, so daß ein universellerer Einsatz für verschiedene Arten von gleichgerichteten Spannungen möglich ist. Auch kann die Baugröße beispielsweise durch die Integration noch weiter verringert werden.

Ein Ausführungsbeispiel der Erfindung ist in der Zeichnung dargestellt und in der nachfolgenden Beschreibung näher erläutert. Es zeigen:
- Fig. 1: ein Schaltbild eines Netzteils als Ausführungsbeispiel und
- Fig. 2: ein Signaldiagramm zur Erläuterung der Wirkungsweise.

Ein Netztransformator 10 transformiert die Eingangswechselspannung von 220 V beispielsweise auf 20 V, wobei der sekundärseitige Innenwiderstand beispielsweise so groß ist, daß ein Kurzschlußstrom von 100m mA fließt. Dieser Netztransformator 10 ist sekundärseitig an eine aus vier Dioden 11 bestehende Gleichrichter-Brückenschaltung angeschlossen, deren Minuspol mit einer Minus-Ausgangsklemme 12 und deren Pluspol über die Schaltstrecke eines Halbleiterschalters 13 und eine dazu in Reihe geschaltete Diode 14 mit einer Plus-Ausgangsklemme 15 verbunden ist. Zwischen die beiden Klemmen 12, 15 ist ein Kondensator 18 mit hoher Kapazität geschaltet (z. B. 470 µF).

Der Verknüpfungspunkt zwischen dem Halbleiterschalter 13 und der Diode 14 ist mit dem Eingang einer ersten, als Schmitt-Trigger ausgebildeten Schwellwertstufe 16 verbunden, die mit einer sehr kleinen Referenzspannung U1 beaufschlagt ist. Diese Referenzspannung U1 ist gemäß der Darstellung extern angelegt, sie kann selbstverständlich auch intern erzeugt werden, beispielsweise in bekannter Weise durch eine Z-Diodenanordnung. Ein verstellbarer Widerstand zur Variation dieser Referenzspannung kann ebenfalls bei Bedarf vorgesehen sein. Der Ausgang der Schwellwertstufe 16 ist mit dem Rücksetzeingang R eines Flip -Flop s 17 verbunden, dessen Ausgang an den Steuereingang des Halbleiterschalters 13 angeschlossen ist, im Falle der Ausbildung als Transistor an die Basis dieses Transistors. Weiterhin ist die am Kondensator 18 anliegende Ausgangsgleichspannung einem Eingang einer zweiten Schwellwertstufe 19 zugeführt, deren Ausgang mit den Setzeingang S des Flip -Flop s 17 verbunden ist. Die Flip -Flop -Eingänge sind vorzugsweise als dynamische Eingänge ausgebildet. Die zweite Schwellwertstufe 19 ist mit einer Referenzspannung U2 beaufschlagt, die dem vorgegebenen Sollwert, also der Sollspannung, entspricht. Auch diese Spannung kann wiederum intern oder extern angelegt oder erzeugt werden und einstellbar ausgebildet sein.

Für die beiden Schwellwertstufen können handelsübliche Schmitt-Trigger verwendet werden, oder sie werden zusammen mit dem Flip -Flop oder einer ähnlich wirkenden Speichervorrichtung als integrierter Schaltkreis oder als Mikrorechner ausgebildet.

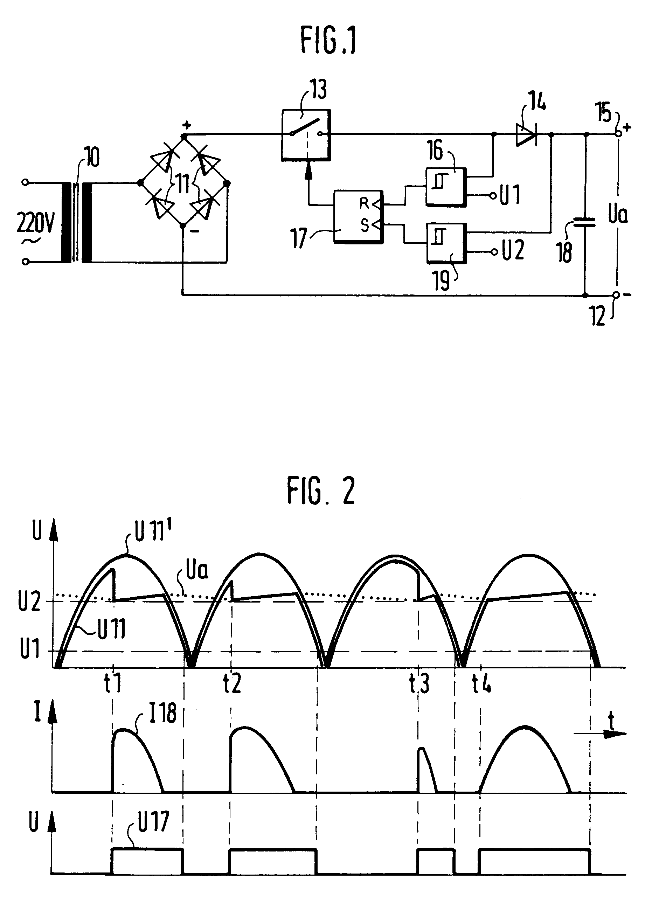

Die Wirkungsweise des in Fig. 1 dargestellten Ausführungsbeispiels soll im folgenden anhand des in Fig. 2 dargestellten Signaldiagramms erläutert werden. Der Spannungsverlauf U11′ ist der theoretische Spannungsverlauf am Ausgang des Brückengleichrichters 11, wie er auftreten würde, wenn keine Belastung stattfinden würde. Zur Erläuterung der Spannungsverhältnisse wird davon ausgegangen, daß das Netzteil ausgangsseitig belastet ist, so daß die Spannung U a am Kondensator 18 stetig abnimmt. Dies ist durch den gepunkteten Spannungsverlauf dargestellt. Zunächst befindet sich das Flip -Flop 17 im rückgesetzten Zustand, und der Halbleiterschalter 13 befindet sich im Sperrzustand. Die Spannung am Ausgang des Brückengleichrichters U11 steigt daher zunächst entsprechend dem theoretischen Spannungsverlauf an. Erreicht die sich verringernde Ausgangsspannung U a den Sollwert U2 zum Zeitpunkt t2, so wird das Flip -Flop 17 durch das Ausgangssignal der Schwellwertstufe 19 gesetzt, und der Halbleiterschalter 13 wird in den Sättigungszustand umgeschaltet. Die Spannung am Ausgang des Brückengleichrichters 11 fällt plötzlich ab, steigt jedoch dann wieder gemäß der ansteigenden Spannung am Kondensator 18, der über den Halbleiterschalter 13 geladen wird. Der Ladestrom I18 ist im mittleren Diagramm dargestellt. Der Spannungsanstieg setzt sich so lange fort, bis die Spannung am Ausgang des Brückengleichrichters 11 infolge der abnehmenden Halbwellenspannung abnimmt. Zu diesem Zeitpunkt wird der Ladevorgang des Kondensators 18 beendet, und die Spannung U11 nimmt entsprechend dem Verlauf der gleichgerichteten Spannungshalbwelle ab. Wird der Schwellwert U1 unterschritten, so wird das Flip -Flop 17 über den Ausgang der Schwellwertstufe 16 rückgesetzt, wodurch der Halbleiterschalter 13 wieder in den Sperrzustand versetzt wird.

Dieser Vorgang wiederholt sich nun bei jeder Spannungshalbwelle, wobei die Einschaltzeitpunkte t1, t2, t3, t4 ... von der Entladung des Kondensators 18, also von der angelegten Last, abhängen. Je größer die Entladung desto früher der Einschaltzeitpunkt für den Ladevorgang im darauffolgenden Zyklus. Die Zeitdauer des Steuersignals U17 für den Halbleiterschalter 13, das die Zeitdauer des jeweiligen Sättigungszustands vorgibt, variiert somit in Abhängigkeit der angelegten Last, wobei der Ausschaltzeitpunkt jeweils zyklisch gemäß dem Verlauf der gleichgerichteten Spannungshalbwellen erfolgt.

Variationen der dargestellten Schaltung, die nur ein Ausführungsbeispiel darstellt, sind in verschiedener Weise möglich. So kann beispielsweise das Ende des Sättigungszustands auch in Abhängigkeit der Wechselspannung am sekundärseitigen Ausgang des Netztransformators erfolgen, wobei beispielsweise die Null-Durchgänge den Schaltzeitpunkt vorgeben. Weiterhin kann unter Wegfall der Schwellwertstufe 16 der Rücksetzeingang auch direkt mit dem Verknüpfungspunkt zwischen dem Halbleiterschalter 13 und der Diode 14 verbunden sein, wobei dann beispielsweise ein erneuter Spannungsanstieg ab dem Null-Wert am dynamischen Eingang des Flip -Flop s 17 einen Schaltvorgang bewirkt. Anstelle eines Flip -Flop s 17 kann auch prinzipiell eine logische Verknüpfungsschaltung treten, sofern die als Schmitt-Trigger ausgebildeten Schwellwertstufen entsprechend angepaßte Schaltschwellen aufweisen.

## Patentansprüche

1. Netzteil zur Erzeugung einer geregelten Gleichspannung aus einer Netzwechselspannung, mit einem Netztransformator (10), einer nachgeschalteten Gleichrichteranordnung (11), einem in einer von der Gleichrichteranordnung (11) wegführenden Gleichspannungsleitung geschalteten Halbleiterelement (13), das in Abhängigkeit eines vorgebbaren Sollwerts und des Istwerts der Ausgangsgleichspannung steuerbar ist und ausschließlich zwischen dem Sättigungs- und Sperrzustand umschaltbar ausgebildet ist, und mit einem mit der Ausgangsgleichspannung beaufschlagten über eine Diode (14) mit dem Halbleiterelement (13) verbundenen Kondensator (18) am Ausgang des Netzteils, dadurch gekennzeichnet, daß eine den Sättigungszustand bei Erreichen des Sollwerts (obere Spannungsschwelle U2) durch die sich verringernde Ausgangsgleichspannung und den Sperrzustand im Zyklus der Netzwechselspannung oder der daraus abgeleiteten gleichgerichteten Spannungshalbwellen bei Erreichen einer unteren Spannungsschwelle (U1) einschaltende Steuervorrichtung (16, 17, 19) dem Halbleiterelement (13) zugeordnet ist.

2. Netzteil nach Anspruch 1, dadurch gekennzeichnet, daß die Gleichrichteranordnung (11) als Brückengleichrichter ausgebildet ist.

3. Netzteil nach Anspruch 1 oder 2, dadurch gekennzeichnet, daß das Erreichen oder Unterschreiten eines im Vergleich zur Scheitelspannung sehr geringen Spannungswerts durch die gleichgerichteten Spannungshalbwellen erfaßt und jeweils als den Sperrzustand auslösendes Signal dem Halbleiterelement (13) zugeführt wird.

4. Netzteil nach Anspruch 3, dadurch gekennzeichnet, daß eine eingangsseitig mit den gleichgerichteten Spannungshalbwellen beaufschlagte, die den Sperrzustand auslösenden Signale erzeugende Schwellwertstufe (16) vorgesehen ist.

5. Netzteil nach einem der vorhergehenden Ansprüche, dadurch gekennzeichnet, daß ein den Sollwert-/Istwert-Vergleich durchführender, insbesondere als Schwellwertstufe (19) ausgebildeter Komparator vorgesehen ist.

6. Netzteil nach Anspruch 4 oder 5, dadurch gekennzeichnet, daß die Schwellwertstufe (16,19) als Schmitt-Trigger ausgebildet ist.

7. Netzteil nach einem der vorhergehenden Ansprüche, dadurch gekennzeichnet, daß eine die Steuersignale für das Halbleiterelement (13) speichernde Speichervorrichtung (17) dem Halbleiterelement (13) vorgeschaltet ist.

8. Netzteil nach Anspruch 7, dadurch gekennzeichnet, daß die Speichervorrichtung (17) als bistabile Stufe ausgebildet ist.

9. Netzteil nach einem der vorhergehenden Ansprüche, dadurch gekennzeichnet, daß der Netztransformator (10) einen hohen Innenwiderstand aufweist.

10. Netzteil nach einem der vorhergehenden Ansprüche, gekennzeichnet durch die Ausbildung der Schwellwertstufen (16, 19) und des Speichers (17) als integrierter Schaltkreis oder als Mikrorechner.

## Claims

1. Power supply unit for the generation of a controlled direct voltage from a mains alternating voltage, with a mains transformer (10), a rectifier arrangement (11) connected in series therewith, a semiconductor element (13) connected into a direct voltage line from the rectifier arrangement (11), controllable in dependence on a preset value and the actual value of the d.c. output voltage and designed for exclusive switching between the saturation state and the off state, and with a capacitor (18), to which the d.c. output voltage is applied and which is connected to the semiconductor element (13) by way of a diode (14), located at the output of the power supply unit, characterized in that a control device (16, 17, 19) triggering the saturation state on the attainment of the preset value (upper voltage threshold U2) by the decreasing d.c. output voltage and the off state in the cycle of the mains alternating voltage or the derived rectified voltage half-waves on the attainment of a lower voltage threshold (U1) is allocated to the semiconductor element (13).

2. Power supply unit according to Claim 1, characterized in that the rectifier arrangement (11) is designed as a bridge rectifier.

3. Power supply unit according to Claim 1 or 2, characterized in that the attainment or shortfall of a voltage value which is very low compared to the crest voltage is registered by the rectified voltage half-waves and signalled to the semiconductor element (13) to trigger the off state.

4. Power supply unit according to Claim 3, characterized in that the input side is provided with a threshold stage (16) to which the rectified voltage half-waves are applied and which generates the signals for the triggering of the off state.

5. Power supply unit according to any of the preceding claims, characterized in that a comparator, designed in particular as a threshold stage (19), is provided to compare the preset value with the actual value.

6. Power supply unit according to Claim 4 or 5, characterized in that the threshold stage (16, 19) is designed as a Schmitt trigger.

7. Power supply unit according to any of the preceding claims, characterized in that a memory device (17) storing the control signals for the semiconductor element (13) is connected in series therewith.

8. Power supply unit according to Claim 7, characterized in that the memory device (17) is designed as a bistable stage.

9. Power supply unit according to any of the preceding claims, characterized in that the mains transformer (10) has a high internal resistance.

10. Power supply unit according to any of the preceding claims, characterized in that the threshold stages (16, 19) and the memory (17) are designed as an integrated circuit or a microcomputer.

## Revendications

1. Bloc d'alimentation destiné à générer une tension continue régulée à partir d'une tension alternative de secteur, comportant un transformateur de puissance (10), un dispositif redresseur de courant (11) placé en aval, un élément semiconducteur (13) monté sur une ligne de tension continue partant du dispositif redresseur de courant (11), lequel peut être piloté en fonction d'une valeur de consigne pouvant être prédéterminée et de la valeur effective de la tension continue de sortie et qui est conçu pour être exclusivement basculable entre l'état de saturation et l'état de blocage, ainsi qu'un condensateur (18) alimenté par la tension continue de sortie, placé à la sortie du bloc d'alimentation et relié à l'élément semiconducteur (13) par une diode (14), caractérisé en ce qu'un dispositif de commande (16, 17, 19) est associé à l'élément semiconducteur (13), lequel déclenche l'état de saturation lorsque la valeur de consigne est atteinte (seuil supérieur de tension U2) par une diminution de la tension continue de sortie, et déclenche l'état de blocage lorsque le seuil inférieur de tension (U1) est atteint dans le cycle de la tension alternative du secteur ou des demi-ondes de tension redressées en découlant.

2. Bloc d'alimentation selon la revendication 1, caractérisé en ce que le dispositif redresseur de courant (11) est conçu sous forme d'un redresseur à pont.

3. Bloc d'alimentation selon la revendication 1 ou 2, caractérisé en ce que, lorsque la tension des demi-ondes de tension redressées atteint ou passe en-dessous d'une valeur faible par rapport à la tension de crête, ces états sont détectés et transmis respectivement à l'élément semiconducteur (13) sous forme de signal déclenchant l'état de blocage.

4. Bloc d'alimentation selon la revendication 3, caractérisé en ce qu'il est prévu un dispositif à valeur de seuil (16) alimenté côté entrée par les demi-ondes de tension redressées, qui engendre les signaux déclenchant l'état de blocage.

5. Bloc d'alimentation selon l'une des revendications précédentes, caractérisé en ce qu'il est prévu un comparateur, plus particulièrement réalisé sous la forme d'un dispositif à valeur de seuil (19), qui effectue la comparaison entre la valeur de consigne et la valeur effective.

6. Bloc d'alimentation selon la revendication 4 ou 5, caractérisé en ce que les dispositifs à valeur de seuil (16, 19) sont réalisés sous forme de triggers de Schmitt.

7. Bloc d'alimentation selon l'une des revendications précédentes, caractérisé en ce qu'un dispositif de mémorisation (17), mémorisant les signaux de commande pour l'élément semiconducteur (13), est placé en amont de l'élément semiconducteur (13).

8. Bloc d'alimentation selon la revendication 7, caractérisé en ce que le dispositif de mémorisation (17) est réalisé sous forme d'un dispositif bistable.

9. Bloc d'alimentation selon l'une des revendications précédentes, caractérisé en ce que le transformateur de puissance (10) a une résistance interne élevée.

10. Bloc d'alimentation selon l'une des revendications précédentes, caractérisé en ce que les dispositifs de valeur de seuil (16, 19) et la mémoire (17) sont réalisés sous forme de circuit intégré ou de microcalculateur.
